# FASCICULE DE BREVET EUROPEEN

(11) **EP 0 512 653 B1**
(45) Date de publication et mention de la délivrance du brevet: **24.09.1997**
(21) Numéro de dépôt: 92201316.4
(22) Date de dépôt: 08.05.1992
(51) Int. Cl.: B60S 1/08, B60R 1/12

(54) **Dispositif de nettoyage à commande automatique notamment pour pare-brise de véhicule automobile**
Automatische Steuerung von Reinigungsanlagen, insbesondere für Kraftfahrzeugwindschutzscheiben
Automatically controlled cleaning device, notably for vehicle windscreens

(30) Priorité: 10.05.1991 FR 9105784
(43) Date de publication de la demande: 11.11.1992
(73) Titulaire: SMH Management Services AG, CH-2501 Biel (CH)
(72) Inventeur: Arditi, Marcel, CH-1203 Genève (CH); Béchet, Louis, F-74140 Sciez (FR); Ittah, Benjamin, CH-1224 Chêne-Bougeries/Genève (CH)
(74) Mandataire: de Raemy, Jacques

(56) Documents cités:
- US-A- 3 794 866
- US-A- 4 827 198
- PATENT ABSTRACTS OF JAPAN vol. 9, no. 57 (M-363)(1780) 13 Mars 1985 & JP-A-59 192 651 (FUJITSU TEN) 1 Novembre 1984
- PATENT ABSTRACTS OF JAPAN vol. 8, no. 124 (M-301)(1561) 9 Juin 1984 & JP-A-59 029 539 (NIPPON DENSO)
- IEEE TRANSACTIONS ON ULTRASONICS, FERROELECTRICS, AND FREQUENCY CONTROL vol. 37, no. 6, Novembre 1990, NEW YORK (US) pages 506 - 513; GREWE ET AL: 'Acoustic Properties of Particle/polymer Composites for Ultrasonic Transducer Backing Applications'
- JOURNAL OF THE ACOUSTICAL SOCIETY OF AMERICA vol. 75, no. 5, Mai 1984, NEW YORK (US) pages 1629 - 1633; BAR-COHEN ET AL: 'Multiphase Backing Materials for Piezoelectric Broadband Transducers.'

## Description

L'invention concerne un dispositif de nettoyage à commande automatique et plus particulièrement un dispositif d'essuie-glace notamment pour véhicules automobiles associé à des moyens de détection ultrasonores de corps étrangers tel que l'eau à la surface extérieure d'un pare-brise, ces moyens étant aptes à fournir un signal représentatif de la présence desdits corps étrangers en vue de la commande appropriée dudit dispositif d'essuie glace.

Au cours des dernières années différents types de dispositifs de nettoyage à commande automatique tels que des dispositifs d'essuie-glace ont été proposés.

Un premier dispositif fonctionnant en réponse aux vibrations produites par l'impact de gouttes de pluie sur un détecteur disposé à l'extérieur sur le capot du véhicule est décrit dans le document EP-A-0 102 622. Selon ce dispositif, le détecteur est mis en vibration en réponse à l'impact des gouttes de pluie et produit ainsi un signal de sortie représentatif des conditions de pluie qui est comparé à un seuil pour fournir un signal de commande des essuie-glace dès que le signal de sortie dépasse le niveau du seuil.

Un tel dispositif ne donne toutefois pas entièrement satisfaction. En effet, le fait que le détecteur soit disposé sur le capot du véhicule l'expose à un grand nombre d'impuretés telles que des poussières ou analogues qui, mélangées à la pluie entraînent des perturbations dans le mode de vibration du détecteur et par conséquent un fonctionnement peu fiable du dispositif. Par ailleurs, tout véhicule automobile présente de nombreuses sources de vibrations, provenant essentiellement du moteur et du contact du véhicule avec la route qui sont susceptibles d'altérer de façon sensible le signal de sortie représentatif des conditions de pluie et, là encore, d'empêcher un fonctionnement correct de la commande des essuie-glace. De plus, lorsque les gouttes de pluie atteignent le détecteur alors que le véhicule est à l'arrêt ou se déplace très lentement l'impact des gouttes sur le détecteur peut ne pas être suffisant pour produire un signal de détection exploitable. Enfin, ce dispositif n'étant pas disposé dans le champ des essuie-glace il ne permet pas de donner une image fiable de l'état de propreté du pare-brise dans le champ de vision du conducteur.

On connaît également du document DE-A-2 630 470 un dispositif de commande automatique de la vitesse des essuie-glace en fonction des conditions de pluie qui fonctionne sur la base de la détection capacitive de l'humidité à la surface extérieure du pare-brise. Toutefois, un tel dispositif présente des temps de réaction relativement longs. De plus, le fait qu'il soit installé à l'extérieur du véhicule nécessite de faire sortir des contacts, ce qui est peu aisé dans cette partie du véhicule.

Un dispositif d'essuie-glace qui ne présente pas ce dernier inconvénient puisque son système de détection est installé à l'intérieur du véhicule et qui fonctionne sur la base de la détection ultrasonore des conditions de précipitation est décrit dans le certificat d'auteur SU-833 463.

Ce système de détection, installé sur la face intérieure du pare-brise d'un véhicule automobile, comprend une première unité qui émet des ondes ultrasonores et une seconde unité qui recoit et traite les signaux ultrasonores émis.L'unité émettrice est disposée sur un bord extrême du pare-brise tandis que l'unité réceptrice est disposée sur un bord extrême opposé de ce dernier. En fonctionnement, les signaux ultrasonores émis par la première unité sont transmis dans le pare-brise, détectés par la seconde unité et convertis par cette dernière en un signal électrique représentatif de la présence ou de l'absence d'un film d'eau à la surface du pare-brise. On détermine par comparaison du signal reçu avec un signal de référence s'il y a lieu ou pas de commander la mise en marche des essuie-glace.

Un tel dispositif présente toutefois en pratique un certain nombre de problèmes.

Un problème principal de ce dispositif réside dans le fait que ce dispositif est sensible à d'autres phénomènes que la simple présence d'un film d'eau à la surface extérieure du pare-brise. En effet, il est par exemple difficile voire même impossible de faire la distinction entre la présence d'une couche de buée à la surface intérieure du pare-brise, cas dans lequel il est inutile d'actionner les essuie-glace, et la présence d'une couche de même nature à la surface extérieure du pare-brise, cas dans lequel il est particulièrement indiqué d'actionner les essuie-glace. Cette impossibilité est due à une grande ressemblance des signaux ultrasonores qui se propagent dans le pare-brise par réflexion successive entre les surfaces intérieures et extérieures du pare-brise. De plus, un choc dans le pare-brise ou un élément absorbant tel qu'une main posée sur le pare-brise est susceptible de modifier de façon sensible les signaux émis si bien qu'en l'absence d'un circuit de traitement du signal complexe, le dispositif est incapable de distinguer de façon fiable la nature de l'origine des modifications de ces signaux et entraîne souvent, en pratique l'actionnement des essuie-glace lorsque cela n'est pas désiré.

Un autre problème réside dans le fait qu'il est difficile de distinguer avec un tel dispositif s'il est opportun d'actionner les essuie-glace dans le cas relativement fréquent ou la zone balayée par les essuie-glace est "sèche" et la zone non balayée est encore "humide". Une telle situation apparaît par exemple quand, après la pluie, un véhicule circulant dans un sens croise un véhicule circulant en sens inverse et que ces véhicules s éclaboussent mutuellement.

En effet, avec un tel dispositif dont le circuit de traitement est suffisamment sensible, par exemple, pour détecter une fine bruine (cas dans lequel un tel dispositif trouve une de ses applications les plus intéressantes), la présence d'eau dans la zone non balayée du pare-brise va induire une modification des signaux émis et entraîner les essuie-glace sur une zone du pare-brise déjà sèche. Il résulte donc d'un tel fonctionnement une usure prématurée des balais d'essuie-glace et en conséquence un remplacement fréquent de ces derniers.

Un dispositif de commande automatique d'essuie-glace avec un système de détection installé à l'intérieur du véhicule correspondant aux caractéristiques du préambule de la revendication 1 se retrouve dans le document JP-A-59-192 651. Toutefois, ce dispositif comprend aussi deux transducteurs ultrasonores. Dans ce dispositif les deux transducteurs font partie d'un capteur qui est fixé contre la surface interne du pare-brise, dans la zone balayée par les essuie-glace, et qui comprend un boîtier à l'intérieur duquel se trouvent les deux transducteurs, disposés en regard et à égale distance du pare-brise, une plaque écran entre les deux transducteurs, un élément vibrant, par exemple en résine synthétique, entre les transducteurs et le pare-brise et des moyens d'amortissement à l'arrière des transducteurs.

Lorsque le dispositif fonctionne, l'un des transducteurs émet un signal ultrasonore incident en direction du pare-brise. Si le pare-brise est sec et propre ce signal est seulement réfléchi par la surface interne de celui-ci et, avec un certain retard, par sa surface externe. Par contre, la présence d'une goutte d'eau sur le pare-brise et devant le capteur provoque une réflexion supplémentaire du signal incident à l'interface eau/air et, comme le signal supplémentaire réfléchi par cette interface atteint les transducteurs avant le signal réfléchi par la surface externe du pare-brise, la détection de la présence d'une goutte d'eau est effectuée en comparant l'intervalle de temps entre la réception du signal supplémentaire et celle du signal réfléchi par la face interne du pare-brise à une valeur de seuil inférieure à l'intervalle de temps entre les réceptions des signaux réfléchis par les surfaces externe et interne de celui-ci.

Un tel dispositif présente lui aussi des problèmes.

En effet, vu le principe selon lequel ce dispositif fonctionne, il ne peut pas convenir pour les pare-brise de sécurité stratifiés modernes, à cause des réflexions multiples qui se produisent aux interfaces entre les différentes couches.

De plus, ce dispositif est prévu pour ne détecter pratiquement que la présence d'une seule et grosse goutte d'eau dans la zone du pare-brise située en regard des transducteurs. Si cette zone n'est pas suffisamment petite et si de nombreuses gouttes peuvent s'y trouver en même temps le dispositif ne peut plus fonctionner correctement et peut même ne plus fonctionner du tout, à cause des interférences entre les signaux réfléchis par les interfaces eau-air des différentes gouttes.

Enfin, ce dispositif nécessite deux transducteurs, comme celui du document (certificat d'auteur) SU-833 463, ainsi qu'un élément vibrant entre les transducteurs et le pare-brise, ce qui augmente à la fois son coût, son poids et sa complexité.

L'invention a donc pour but principal de remédier aux inconvénients de l'art antérieur susmentionné en fournissant un dispositif de nettoyage à commande automatique, notamment pour véhicule automobile, simple et peu coûteux, qui fonctionne de manière fiable quelle que soit la nature des corps étrangers à éliminer et qui ne nécessite pas de circuit de traitement du signal compliqué.

A cet effet, l'invention a pour objet un dispositif de nettoyage à commande automatique destiné à l'élimination de corps étrangers tels que l'eau, à la surface d'une vitre, cette dernière ayant une surface intérieure et une surface extérieure, ce dispositif comprenant des moyens de nettoyage qui définissent au moins une zone prédéterminée à la surface extérieure de cette vitre, des moyens d'actionnement des moyens de nettoyage, des moyens de détection ultrasonore susceptibles de fournir un signal électrique de détection représentatif de la présence de corps étrangers à la surface extérieure de la vitre et des moyens de commande susceptibles de fournir un signal de commande aux moyens d'actionnement en réponse au signal électrique de détection.

Conformément à l'invention, les moyens de détection comprennent un transducteur unique pouvant émettre au moins un signal ultrasonore incident se propageant dans l'épaisseur de la vitre et pouvant recevoir un signal ultrasonore réfléchi représentatif de la présence des corps étrangers, qui engendre dans le transducteur le signal électrique de détection et les moyens de commande comprennent des moyens pour amplifier ce signal électrique de détection, des moyens de comparaison pour comparer la valeur du signal de détection amplifié à un seuil de référence, dans une fenêtre temporelle ouverte avec un retard déterminé après l'émission du signal ultrasonore incident, et des moyens pour produire le signal de commande des moyens d'actionnement en réponse au signal fourni par les moyens de comparaison.

De plus et toujours conformément à l'invention, le transducteur est fixé, par une première face, contre la surface intérieure de la vitre.

Grâce à ces caractéristiques, les signaux ultrasonores émis par le transducteur se propagent dans l'épaisseur de la vitre et sont réfléchis localement sur une surface équivalente à celle du transducteur si bien que l'influence des phénomènes parasites, tels que ceux mentionnés en liaison avec la description de l'art antérieur et en particulier du certificat d'auteur SU 833 463, est considérablement diminuée et que l'on détermine ainsi de façon sûre la présence de corps étrangers à la surface extérieure de la vitre.

Par ailleurs, lorsque le dispositif selon l'invention est appliqué à un pare-brise de véhicule automobile, il peut être aisément mis en place dans une zone neutre de ce dernier sans diminuer le champ de vision du conducteur puisqu'il ne comprend qu'un seul élément en contact avec le pare-brise.

Selon une caractéristique avantageuse de l'invention, le transducteur est disposé dans la zone nettoyée de la vitre.

D'autres caractéristiques et avantages de l'invention apparaîtront à la lecture de la description qui suit d'un mode de réalisation de l'invention donné à titre d'exemple illustratif mais non limitatif en liaison avec les dessins annexés dans lesquels :
- la figure 1 est une vue partielle schématique de dessus d'un véhicule automobile équipé d'un dispositif de nettoyage selon l'invention,
- la figure 2 est une coupe partielle de l'ensemble de détection du dispositif de nettoyage selon l'invention; et
- la figure 3 est un schéma bloc représentant les liaisons entre divers éléments du dispositif de nettoyage selon l'invention.

La description détaillée du dispositif de nettoyage à commande automatique selon l'invention qui va suivre va être faite dans le cadre d'une application à la commande d'essuie-glace d'un véhicule automobile. Bien entendu, ce dispositif n'est pas limité à cette application et beaucoup d'autres applications pourront être envisagées par l'homme du métier. Par exemple, cette invention pourra être également utilisée de façon avantageuse dans le domaine du nautisme. Il va également de soi que le dispositif de nettoyage ne se limite pas à la commande des essuie-glace et que d'autres systèmes pourront être envisagés par l'homme du métier. Dans le domaine du véhicule automobile, on citera par exemple la commande de dispositifs de nettoyage comprenant des moyens thermiques tels que des résistances.

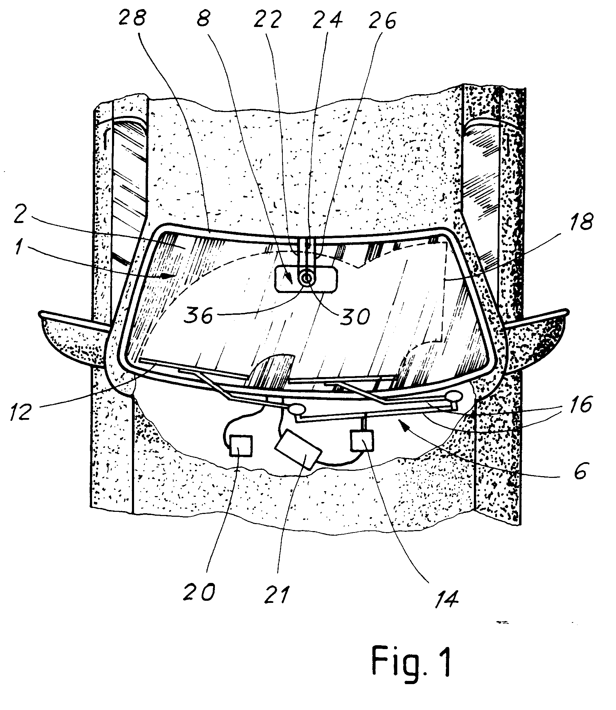

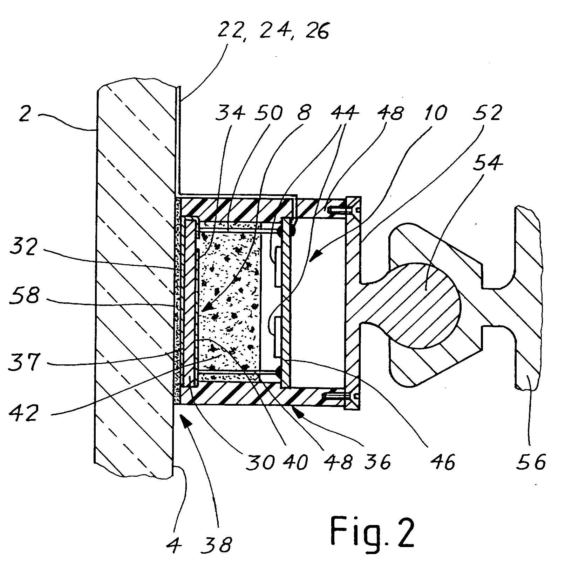

En se référant tout d'abord à la figure 1, on voit une vue partielle de dessus d'un véhicule automobile dans lequel le dispositif de nettoyage à commande automatique selon l'invention a été installé. Le véhicule automobile comprend de façon classique une vitre 1 formant pare-brise et qui comprend une surface extérieure 2 et une surface intérieure 4 (figure 2).

On notera que le pare-brise représenté est monocouche mais il va de soi qu'un tel dispositif peut s'adapter à des pare-brises multicouches.

Ce pare-brise 1 est par ailleurs associé à un dispositif de nettoyage destiné à éliminer la présence de corps étrangers pouvant venir se déposer à la surface extérieure 2 du pare-brise. Par corps étrangers, on entend dans l'exemple décrit, tout élément tel que l'eau, la neige, la boue etc... se trouvant sur la surface extérieure 2 et pouvant entrer dans le champ de vision du conducteur.

Ce dispositif de nettoyage est formé essentiellement d'un ensemble d'essuie-glace 6, de moyens de détection 8 desdits corps étrangers et d'un circuit électronique 10 de commande et de traitement (figure 2).

L'ensemble essuie-glace comprend deux balais 12 entraînés par un moteur 14 au moyen d'une tringlerie 16. Les balais 12 sont susceptibles de se déplacer à la surface extérieure 2 du pare-brise selon un mouvement alternatif en arc de cercle et définissant ainsi une zone prédéterminée 18 délimitée par des traits interrompus et représentant le champ de vision minimum que le conducteur doit avoir à sa disposition. Nous ne décrirons pas davantage cet agencement qui est classique et bien connu de l'homme du métier.

Les moyens de détection 8 qui seront décrits plus en détail en liaison avec la figure 2 sont destinés à fournir un signal de détection représentatif de la présence de corps étrangers à la surface extérieure du pare-brise 2. Selon l'invention, ces moyens 8 sont fixés sur la face intérieure 4 de ce dernier et sont reliés électriquement au circuit 10 qui à son tour est relié, d'une part, à des moyens d'alimentation 20 formés dans l'exemple décrit par la batterie du véhicule et, d'autre part, au moteur 14 par l'intermédiaire d'un circuit de commande 21 du moteur pour l'enclencher ou l'arrêter en réponse au signal de détection provenant des moyens 8.

Bien entendu, le circuit est également relié à la terre qui peut avantageusement être formée par la carrosserie du véhicule.

Les trois liaisons électriques qui viennent d'être décrites sont respectivement réalisées par des conducteurs 22, 24 et 26 collés sur la surface intérieure du pare-brise et s'étendant à partir des moyens de détection vers les éléments concernés par exemple sur le joint 28 qui sert à la fixation du pare-brise sur la carrosserie.

Dans une variante de réalisation, ces conducteurs peuvent avoir la forme de dépôts métalliques réalisés lors de la fabrication du pare-brise.

En se référant plus particulièrement à la figure 2, les moyens de détection 8 comprennent selon l'invention un transducteur ultrasonore 30 pouvant émettre un signal ultrasonore incident se propageant dans l'épaisseur du pare-brise 1 et pouvant recevoir un signal ultrasonore réfléchi représentatif de la présence desdits corps étrangers à la surface extérieure 2 du pare-brise 1 pour élaborer un signal de détection qui est ensuite transmis au circuit de commande et exploité par ce dernier pour, le cas échéant, enclencher le moteur 14.

Dans l'exemple décrit, le transducteur 30 a la configuration d'une pastille qui est faite d'une céramique piézo-électrique telle que le titanate de plomb. Les deux faces opposées de la pastille sont chacune recouvertes d'une électrode 32, respectivement 34. Ces deux électrodes 32, 34 peuvent être formées de façon connue par un dépôt d'une mince couche de métal tel que le nickel ou l'argent.

Le transducteur 30 est logé et fixé dans un boîtier de plastique 36 ayant la configuration d'une section de tube de sorte qu'une première face 37 du transducteur munie de son électrode vienne à fleur ou dépasse légèrement de la surface extrême du boîtier 36 en obturant une première extrémité 38 de ce dernier.

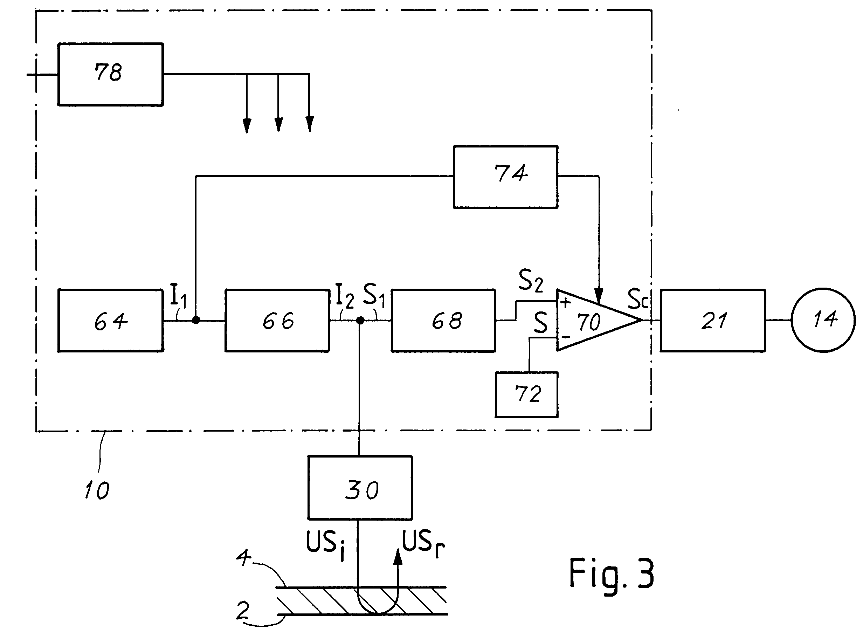

Dans le mode de réalisation représenté à la figure 2 le transducteur 30 est associé par une seconde face 40 opposée à la première à des moyens d'amortissement 42 également logés dans le boîtier 36. Ces moyens d'amortissement permettent d'amortir des ondes réfléchies afin de limiter les perturbations du signal de détection et faciliter ainsi le traitement de ce signal par le circuit électronique dont les composants seront décrits en détail ci-après en liaison avec la figure 3. Ces moyens d'amortissement comprennent ici des particules métalliques noyées dans un liant organique atténuant les ultrasons. De préférence, la taille des particules métalliques est de 20 à 50 fois inférieure à la longueur d'onde des signaux ultrasonores pour disperser l'onde et ainsi réaliser un amortissement efficace.

A titre d'exemple, des particules de tungstène ayant une taille d'environ 5 micromètres noyées dans une résine synthétique telle qu'une résine époxyde ont donné un résultat satisfaisant.

Bien entendu, les moyens d'amortissement 42 utilisés dans le mode de réalisation décrit ne sont pas indispensables au fonctionnement du dispositif selon l'invention et peuvent être supprimés dans une variante de réalisation plus simple.

Le boîtier en plastique 36 loge également le circuit électrique de commande et de traitement 10 formé par des composants électroniques 44 tels que des circuits intégrés dont deux ont été représentés à la figure, montés sur une plaque de circuit imprimé 46.

Le circuit électronique de commande 10 est relié d'une part aux électrodes 32, 34 par des conducteurs 48, 50 s'étendant à l'intérieur du boîtier 36 dans les moyens d'amortissement 42 et d'autre part au moteur 14 par l'intermédiaire de la commande 21 et à la batterie 20 par les conducteurs 22, 24 et 26 qui s'étendent à travers la paroi 48 du boîtier et dont un seul est visible à la figure 2.

Par ailleurs, le boîtier 36 est fermé par un couvercle 52 fixé, par exemple, au moyen de vis à la seconde extrémité de ce dernier.Ce couvercle 52 porte une rotule 54 sur laquelle est avantageusement fixée une extrémité d'un bras 56 de suspension d'un rétroviseur.

Comme cela ressort clairement de la figure 2, le boîtier 36 est fixé par collage sur la surface intérieure 4 du pare-brise 1.Cette fixation est réalisée au moyen d'un film de colle 58 s'étendant entre la surface du transducteur 30 et la surface intérieure du pare-brise.

Ce film de colle 58 présente une épaisseur très faible devant la longueur d'onde des signaux ultrasonores transmis par le transducteur 30.

De cette façon on évite, lors de la propagation des signaux dans le pare-brise des réflexions parasites à l'interface colle, surface intérieure du pare-brise des ondes émises et une trop grande absorption des signaux de sorte que l'on assure un bon couplage entre le transducteur et la surface intérieure du pare-brise.

A cet effet, avec une longueur d'onde des signaux émis de l'ordre du millimètre, un film d'une épaisseur d'environ un centième de millimètre donne des résultats satisfaisants.

Afin de réaliser une transmission et une réception uniforme efficace des signaux ultrasonores respectivement émis et reçus par le transducteur, on veillera à ce qu'aucune bulle d'air ne soit présente aux interfaces transmettant les signaux ultrasonores et notamment entre le transducteur et la surface intérieure de la vitre.

On notera également que la colle utilisée doit présenter des caractéristiques physiques stables dans une large gamme de températures et dans l'exemple décrit, qui correspond aux conditions extrêmes exigées habituellement dans le domaine de l'industrie automobile soit de - 40° à + 100°C. Une colle synthétique du type époxyde pourra être avantageusement utilisée.

On notera également que dans le mode de réalisation décrit, les moyens de détection sont disposés avantageusement dans la zone prédéterminée 18 ou en d'autres termes dans la zone balayée par les balais d'essuie-glace. En effet, une telle disposition permet notamment de rendre une image fidèle de l'état du pare-brise après chaque passage des balais d'essuie-glace sans par ailleurs diminuer le champ de vision du conducteur puisque les moyens de détection sont, comme cela a été mentionné plus haut, associés au pied de fixation du rétroviseur sur le pare-brise.

En se référant maintenant à la figure 3, on va décrire le schéma bloc du circuit électronique de commande du dispositif de nettoyage selon l'invention.

Le circuit électronique de commande 10 comprend d'une part un circuit d'horloge 64 qui délivre des impulsions I₁ d'une durée comprise entre 50 et 200 nanosecondes. D'autre part, le circuit 64 comprend un diviseur qui permet de définir la fréquence de répétition de ces impulsions I₁ dans une gamme allant entre 1 et 100 impulsions par seconde.

Ces impulsions I₁ sont fournies à un circuit de mise en forme 66 qui est agencé de façon à délivrer des impulsions I₂ d'une amplitude de 10 volts.

Ces impulsions I₂ excitent les moyens de détection formés par le transducteur piézo-électrique 30 qui en réponse à ces impulsions I₂ engendre des ondes ultrasonores incidentes USᵢ dont la fréquence est comprise entre 1 et 10 MHz. Ces ondes se propagent dans l'épaisseur du pare-brise et subissent en fait un nombre de réflexions important entre les faces intérieure et extérieure du pare-brise. Les ondes ultrasonores réfléchies USᵣ engendrent dans le transducteur 30 un signal électrique S₁ qui est représentatif de la présence ou de l'absence d'un corps étranger à la surface extérieure du pare-brise.

Chaque signal électrique S₁ ainsi formé est fourni à un amplificateur 68. Les signaux électriques produits sont de l'ordre de 5 millivolts. L'amplificateur 68 a un gain de 40 décibels et une bande passante de 1 à 10 MHz. En d'autres termes, il transforme les signaux S₁ engendrés par le transducteur 30 d'une valeur de 5 millivolts en des signaux S₂ d'une valeur de 500 millivolts crête à crête.

A ce propos, on notera que cet amplificateur comprend un circuit d'entrée apte à supporter sans dommage la tension présente à la sortie du circuit de mise en forme 66.

Ces signaux S₂ sont alors fournis à l'entrée positive d'un comparateur 70 dont l'entrée négative est reliée à des moyens 72 définissant un seuil S de comparaison. Pour des applications spécifiques, ces moyens peuvent bien entendu être réglables. Ce comparateur 70 est également relié à la sortie du circuit 64 par l'intermédiaire d'un circuit de retard 74. Ce circuit 74 permet de réaliser la comparaison dans une fenêtre temporelle. En d'autres termes, cette fenêtre, d'une durée de l'ordre de quelques microsecondes, est ouverte avec un retard ajustable compris entre 2 et 30 microsecondes après chaque impulsion fournie au circuit de mise en forme 66. Pour réaliser ce retard, le circuit 74 compte les impulsions de l'horloge du circuit 64 qui suivent l'impulsion délivrée au circuit 66. Ce retard de 2 à 30 microsecondes est ajustable de manière simple, par exemple en définissant certaines corrections du circuit 10 de manière à pouvoir adapter ce retard aux caractéristiques de la vitre sur laquelle sont installés les moyens de détection.

Le comparateur 70 fournit en sortie un signal binaire S_{c} à un circuit de commande 21 qui enclenche le moteur 14 des essuie-glace pendant un temps déterminé si la présence d'un corps étranger à la surface du pare-brise est détectée.

On notera également que le circuit de commande peut fournir un signal de commande d'un ou d'autres dispositifs tel que le signal de commande de fermeture de la capote. L'ensemble de ce circuit 10 est alimenté dans le cas particulier par la batterie du véhicule par l'intermédiaire d'un circuit de stabilisation 78 fournissant une tension stabilisée de 10 volts et fonctionne en permanence dès que le contact du véhicule est enclenché.

Le dispositif selon l'invention dans l'application à un véhicule automobile qui vient d'être décrite fonctionne de la façon suivante :

Le transducteur 30 engendre régulièrement, en réponse à des signaux électriques délivrés par le circuit électrique 10, des signaux ultrasonores incidents qui se propagent dans l'épaisseur du pare-brise 1 et se réfléchissent à la surface extérieure 2 du pare-brise. L'intensité des signaux ultrasonores réfléchis est fonction de la présence ou de l'absence de corps étrangers tels que l'eau à la surface extérieure du pare-brise. Les signaux ultrasonores réfléchis reçus par le transducteur sont alors transformés en signaux électriques par ce dernier et comparés à un seuil de référence par le comparateur 70 à un instant prédéterminé. Le résultat de la comparaison entraîne alors la commande de l'enclenchement ou du déclenchement du moteur.

## Revendications

1. Dispositif de nettoyage à commande automatique destiné à l'élimination de corps étrangers tels que l'eau, à la surface d'une vitre (1), cette dernière ayant une surface intérieure (4) et une surface extérieure (2), ce dispositif comprenant des moyens de nettoyage (12, 16) qui définissent au moins une zone prédéterminée (18) à la surface extérieure (2) de cette vitre (1), des moyens d'actionnement (14) des moyens de nettoyage (12, 16), des moyens de détection ultrasonore (8) susceptibles de fournir un signal électrique de détection (S₁) représentatif de la présence de corps étrangers à la surface extérieure de la vitre (1) et des moyens de commande (10, 21) susceptibles de fournir un signal de commande aux moyens d'actionnement (14) en réponse au signal électrique de détection, et ce dispositif étant caractérisé en ce que les moyens de détection (8) comprennent un transducteur unique (30) pouvant émettre au moins un signal ultrasonore incident (USᵢ) se propageant dans l'épaisseur de la vitre (1) et pouvant recevoir un signal ultrasonore réfléchi (USᵣ) représentatif de la présence desdits corps étrangers qui engendre dans le transducteur ledit signal électrique de détection (S₁); en ce que lesdits moyens de commande (10, 21) comprennent des moyens (68) pour amplifier ledit signal électrique de détection (S₁), des moyens de comparaison (70, 72, 74) pour comparer la valeur du signal de détection amplifié (S₂) à un seuil de référence (S), dans une fenêtre temporelle ouverte avec un retard déterminé après l'émission du signal ultrasonore incident (USᵢ), et des moyens (21) pour produire ledit signal de commande en réponse au signal (S_{c}) fourni par lesdits moyens de comparaison; et en ce que ledit transducteur (30) est fixé par une première face (37) contre la surface intérieure (4) de la vitre (1).

2. Dispositif de nettoyage à commande automatique selon la revendication 1, caractérisé en ce que le transducteur (30) est disposé dans la zone prédéterminée (18) de la vitre (1).

3. Dispositif de nettoyage à commande automatique selon la revendication 1 ou 2, caractérisé en ce que le transducteur (30) est fixé à la vitre (1) au moyen d'un film (58) de colle.

4. Dispositif de nettoyage à commande automatique selon l'une des revendications 1 à 3, caractérisé en ce que le transducteur (30) est associé par une seconde face (40), opposée à la première (37), à des moyens d'amortissement (42).

5. Dispositif de nettoyage à commande automatique selon la revendication 4, caractérisé en ce que les moyens d'amortissement (42) comprennent des particules métalliques noyées dans un liant organique.

6. Dispositif de nettoyage à commande automatique selon la revendication 5, caractérisé en ce que la taille des particules est de 20 à 50 fois inférieure à la longueur d'onde du signal ultrasonore.

7. Dispositif de nettoyage à commande automatique selon la revendication 5 ou 6, caractérisé en ce que le transducteur (30) et les moyens d'amortissement (42) sont logés dans un boîtier (36) présentant la configuration d'une section du tube.

8. Dispositif de nettoyage à commande automatique selon l'une quelconque des revendications précédentes, caractérisé en ce que la durée du signal ultrasonore est inférieure à 1 microseconde.

9. Dispositif de nettoyage à commande automatique selon l'une quelconque des revendications précédentes, caractérisé en ce que ladite comparaison du signal électrique amplifié (S₂) avec un seuil de référence (S) est effectuée pendant une durée inférieure à 10 microsecondes et avec un retard compris entre 2 et 50 microsecondes à compter de l'émission du signal ultrasonore incident (USᵢ).

10. Dispositif de nettoyage à commande automatique selon l'une quelconque des revendications précédentes caractérisé en ce que la vitre (1) est un pare-brise sur la surface intérieure (4) duquel est collé un rétroviseur et en ce que le transducteur (30) est logé dans le pied de fixation du rétroviseur.

## Claims

1. Automatically controlled cleaning device adapted to remove foreign bodies such as water from the surface of a window (1), the latter having an inside surface (4) and an outside surface (2), this device comprising cleaning means (12, 16) which define at least one predetermined area (18) on the outside surface (2) of this window (1), driving means (14) for driving the cleaning means (12, 16), ultrasonic detection means (8) capable of supplying an electrical detection signal (S₁) representative of the presence of foreign bodies on the outside surface of the window (1) and control means (10, 21) capable of supplying a control signal to the driving means (14) in response to the electrical detection signal, and this device being characterized in that the detection means (8) comprise a unique transducer (30) capable of emitting at least one incident ultrasonic signal (USᵢ) propagating within the thickness of the window (1) and of receiving a reflected ultrasonic signal (USᵣ) representative of the presence of said foreign bodies which create said electrical detection signal (S₁) in the transducer; in that said control means (10, 21) comprise means (68) for amplifying said electrical detection signal (S₁), comparison means (70, 72, 74) for comparing the value of the amplified detection signal (S₂) with a reference threshold (S), in a time window which is open with a determined delay after the emission of the incident ultrasonic signal (USᵢ), and means (21) for producing said control signal in response to the signal (S_{c}) provided by said comparison means; and in that said transducer (30) is fixed by a first face (37) against the inside surface (4) of the window (1).

2. Automatically controlled cleaning device according to claim 1, characterized in that the transducer (30) is arranged in the predetermined area (18) of the window (1).

3. Automatically controlled cleaning device according to claim 1 or 2, characterized in that the transducer (30) is fixed to the window (1) by means of an adhesive film (58).

4. Automatically controlled cleaning device according to one of claims 1 to 3, characterized in that the transducer (30) is associated by a second face (40), opposite the first face (37), with damping means.

5. Automatically controlled cleaning device according to claim 4, characterized in that the damping means (42) comprise metal particles embedded in an organic bonding material.

6. Automatically controlled cleaning device according to claim 5, characterized in that the size of the particles is 20 to 50 times smaller than the wavelength of the ultrasonic signal.

7. Automatically controlled cleaning device according to claim 5 or 6, characterized in that the transducer (30) and the damping means (42) are housed in a housing (36) presenting the configuration of the section of a tube.

8. Automatically controlled cleaning device according to any one of the preceding claims, characterized in that the duration of the ultrasonic signal is less than 1 microsecond.

9. Automatically controlled cleaning device according to any one of the preceding claims, characterized in that said comparison of the amplified electrical signal (S₂) with a reference threshold (S) is perfomed during a period lasting less than 10 microseconds and with a delay of between 2 and 50 microseconds from the time of transmission of the incident ultrasonic signal (USᵢ).

10. Automatically controlled cleaning device according to any one of the preceding claims, characterized in that the window (1) is a windscreen, on the inside surface (4) of which a rear-view mirror is bonded and in that the transducer (30) is housed in the base of the rear-view mirror mounting.

## Patentansprüche

1. Reinigungsvorrichtung mit automatischer Steuerung, bestimmt zum Entfernen von Fremdkörpern, wie Wasser, von der Oberfläche einer Scheibe (1) mit einer Innenoberfläche (4) und einer Außenoberfläche (2), welche Vorrichtung mindestens eine vorbestimmte Zone (18) auf der Außenoberfläche (2) dieser Scheibe begrenzende Reinigungsmittel (12, 16), Betätigungsmittel (14) der Reinigungsmittel (12, 16), ein für das Vorhandensein von Fremdkörpern auf der Außenoberfläche der Scheibe (1) repräsentatives elektrisches Erfassungssignal (S₁) liefernde Ultraschall-Erfassungsmittel (8) und ein Steuersignal an die Betätigungsmittel (14) in Reaktion auf das elektrische Erfassungssignal liefernde Steuermittel (10, 21) umfaßt, welche Vorrichtung dadurch gekennzeichnet ist, daß die Erfassungsmittel (8) einen einzigen Wandler (30) umfassen, der mindestens ein sich in der Dicke der Scheibe (1) ausbreitendes Auftreff-Ultraschallsignal (USᵢ) aussenden und ein für das Vorhandensein von Fremdkörpern repräsentatives reflektiertes Ultraschallsignal (USᵣ), das in dem Wandler das elektrische Erfassungssignal (S₁) erzeugt, empfangen kann; daß die Steuermittel (10, 21) Mittel (68) für das Verstärken des elektrischen Erfassungssignals (S₁), Vergleichsmittel (70, 72, 74) für das Vergleichen des Wertes des verstärkten Erfassungssignals (S₂) mit einer Referenzschwelle (S) in einem nach der Aussendung des Auftreff-Ultraschallsignals (USᵢ) mit einer bestimmten Nacheilung offenen Zeitfenster, und Mittel (21) für das Erzeugen des Steuersignals in Reaktion auf das von den Vergleichsmitteln gelieferte Signal (S_{c}) umfassen; und daß der Wandler (30) mit einer ersten Seite (37) an der Innenoberfläche (4) der Scheibe (1) befestigt ist.

2. Reinigungsvorrichtung mit automatischer Steuerung nach Anspruch 1, dadurch gekennzeichnet, daß der Wandler (30) in der vorbestimmten Zone (18) der Scheibe (1) angeordnet ist.

3. Reinigungsvorrichtung nach Anspruch 1 oder 2, dadurch gekennzeichnet, daß der Wandler (30) an der Scheibe (1) mittels einer Klebefolie (58) befestigt ist.

4. Reinigungsvorrichtung nach einem der Ansprüche 1 bis 3, dadurch gekennzeichnet, daß der Wandler (30) an einer zweiten Seite (40) gegenüber der ersten Seite (37) Dämpfungsmitteln (42) zugeordnet ist.

5. Reinigungsvorrichtung nach Anspruch 4, dadurch gekennzeichnet, daß die Dämpfungsmittel (42) metallische Partikel, eingebettet in ein organisches Bindemittel, umfassen.

6. Reinigungsvorrichtung nach Anspruch 5, dadurch gekennzeichnet, daß die Größe der Partikel um 20- bis 50mal kleiner ist als die Wellenlänge des Ultraschallsignals.

7. Reinigungsvorrichtung nach Anspruch 5 oder 6, dadurch gekennzeichnet, daß der Wandler (30) und die Dämpfungsmittel (42) in einem Gehäuse (36) untergebracht sind, das die Konfiguration eines Rohrabschnitts aufweist.

8. Reinigungsvorrichtung nach einem der vorangehenden Ansprüche, dadurch gekennzeichnet, daß die Dauer des Ultraschallsignals kleiner alseine Mikrosekunde ist.

9. Reinigungsvorrichtung nach einem der vorangehenden Ansprüche, dadurch gekennzeichnet, daß der Vergleich des verstärkten elektrischen Signals (S₂) mit einer Referenzschwelle (S) während einer Dauer erfolgt, die kleiner ist als 10 Mikrosekunden, und mit einer Nacheilung, die zwischen 2 und 50 Mikrosekunden liegt, beginnend mit der Aussendung des Auftreff-Ultraschallsignals (USᵢ).

10. Reinigungsvorrichtung nach einem der vorangehenden Ansprüche, dadurch gekennzeichnet, daß die Scheibe (1) eine Windschutzscheibe ist, auf deren Innenoberfläche (4) ein Rückspiegel aufgeklebt ist, und daß der Wandler (30) in dem Befestigungsfuß des Rückspiegels untergebracht ist.
